# EUROPEAN PATENT SPECIFICATION

(11) **EP 0 424 055 B1**
(45) Date of publication and mention of the grant of the patent: **07.12.1994**
(21) Application number: 90311241.5
(22) Date of filing: 15.10.1990
(51) Int. Cl.: A23K 1/16, A23K 1/18

(54) **Feedstuffs**
Tierfutter
Nourritures pour animaux

(30) Priority: 17.10.1989 GB 8923398; 20.07.1990 GB 9015987
(43) Date of publication of application: 24.04.1991
(73) Proprietor: UNILEVER PLC, London EC4P 4BQ (GB); UNILEVER N.V., 3013 AL Rotterdam (NL)
(72) Inventor: Fletcher, John Michael Edward, Shambrook, Bedford MK44 1LQ (GB); Newbold, John Richard, Shambrook, Bedford MK44 1LQ (GB)
(74) Representative: Dekker, Enno E.J.

(56) References cited:
- JOURNAL OF DAIRY SCIENCE, vol. 61, no. 2, 1978, pages 229-232, Champaign, US;J.L. MORRILL et al.: "Effect of feed flavor in milk and calf starter on feed consumption and growth"
- JOURNAL OF FOOD SCIENCE, vol. 51, no. 5, 1986, pages 1301-1306, Chicago, US; R.ZILBERBOIM et al.: "Microencapsulation by a dehydrating liquid:retention of paprika oleoresin and aromatic esters"
- PATENT ABSTRACTS OF JAPAN, vol. 4, no. 124 (C-23)[606], 2nd September 1980;& JP-A-55 77 865 (KIYOUDOU SHIRIYOU K.K.) 12-06-1980
- AGRICULTURAL AND BIOLOGICAL CHEMISTRY, vol. 34, no. 11, 1970, pages 1668-1675,Tokyo, JP; M. YOSHIDA et al.: "Availability of energy in esters of aliphaticacids and alcohols by growing chicks"

## Description

The present invention relates to animal feedstuffs.

In the Journal of Dairy Science, 61 (2), 229-232 (1978) it is disclosed that calves which are fed with milk and starter feed consume more when the milk or starter feed was flavoured with a flavour composition containing ethylbutyrate, butter-scotch, maple flavour and saccharin.

In Patent Abstracts of Japan, 4 (124) (C-23) [606], 2nd September 1980 (JP-A-5577865) it is disclosed that a substance having passion fruit flavour could enhance palatability of artificial feedstuffs for myna birds. The said substance contains, inter alia, 4-7% wt. of ethyl butyrate.

The Journal of Food Science, 51 (5) 1301-1306 (1986) discloses microcapsules containing various volatile compounds such as ethylbutyrate.

By the invention we have found that the incorporation of minor amounts of esters of short-chain (i.e. C₂-C₆) fatty acids in weaning diets for young mammals, especially pigs and calves, has a beneficial effect in enhancing feed intake and/or growth rate. In particular, we have found this benefit associated with esters of butyric acid. Preferably short-chain alkyl esters, such as C₂-C₆ alkyl esters, and especially ethyl esters, are used.

Therefore, the invention relates to the use of an ester of a short-chain fatty acid as a diet additive to enhance feed intake and/or growth rate in mammals. Preferred esters for this purpose are alkyl esters of short-chain fatty acids, and most preferred is ethylbutyrate.

The invention provides a feedstuff for feeding to young mammals, especially to young monogastric mammals, such as pigs, incorporating an ester of a C₂-C₆ fatty acid in an amount sufficient to enhance feed intake and/or growth rate.

Thus the invention relates more in particular to the use of an ester as disclosed above as a diet additive to enhance feed intake and/or growth rate of young ruminants, especially calves.

The invention also provides a feedstuff for feeding to young ruminants, such as calves, incorporating an ester of a short-chain fatty acid in an amount sufficient to enhance feed intake and/or growth rate.

Additionally, the invention relates to the use of an ester as disclosed above as a diet additive to enhance feed intake and/or growth rate of young monogastric animals, especially piglets.

A particular embodiment of the invention is a feedstuff containing ethyl butyrate.

Preferably, the amount of the ester incorporated in the feedstuff is at least 0.01% by weight, and more preferably at least about 0.05% by weight.

Immediately post-weaning, piglets normally eat about 100 gm of feed per day. A convenient inclusion level for the ester is about 0.1% by weight of the post-weaning feed, increasing to about 0.2% by weight after a few days, e.g. about 4 days.

Where appropriate, e.g. for the calf, the ester can be incorporated at an effective level in a milk replacer (milk substitute) and/or in a weaning diet.

We believe that the observable benefits of enhanced feed intake and/or enhanced growth rate may arise through an effect of the ester on cell development in the small intestine. In the cae of young ruminants, these observable benefits may also arise as a result of enhanced rumen development.

The invention further relates to the use of ethylbutyrate as a diet additive to enhance disaccharidase activity in the small intestine of pigs. More in particular, the invention relates to the use of ethylbutyrate as a diet additive to enhance lactase, sucrase or maltase activity in some parts of the small intestine of pigs.

Also, ethyl butyrate in particular can impart an attractive flavour and aroma to the diet.

Apart from the inclusion of the ester, the formulation of the feedstuff can be entirely conventional and it can incorporate normal amounts of standard diet ingredients, such as proteins, carbohydrates, lipids, minerals and vitamins. The Physical preparation of the feed can be achieved using any conventional equipment, such as extrusion (pelletting) equipment. Any nutritionally-appropriate combination of conventional feed ingredients can be used, e.g. grains, either whole or milled, such as barley, wheat, sorghum, maize, rice, oats and rye; cereal by-products, such as wheat feed (wheat germ), maize dark grains, barley dark grains, brewers grains, malt culms (sprouting tips from the brewing industry), maize germ, grain screenings and oat feed; residues derived from oil seeds such as rape, soya, groundnut, palm kernel, sunflower, linseed, and cotton-seed; oils and fats of vegetable or animal origin; any of the miscellaneous products of plant or animal origin conventionally used in feedstuff manufacture, such as field beans, field peas, tapioca, sugarbeet pulp, potato pulp, straw, molasses, single-cell protein, and fish meal; and vitamins and mineral additives.

If the feedstuff of the invention is in the form of a milk replacer, ie. a dry powder that can be reconstituted with water to provide a milk-like liquid, the principal components can be any of those used in conventional milk replacers. Typically these are skimmed milk powder; fat; spray-dried whey powder; non-milk proteins such as soya protein, fish meal, single-cell protein and legume meal; minerals; vitamins; and other minor additives such as edible acids and preservatives. These components can be blended together by dry-mixing.

Esters such as ethyl butyrate tend to be highly volatile. If desired, they can be incorporated in encapsulated form in the feedstuff. For example, the ester can be encapsulated by spray-drying with modified starches such as maltodextrin or "Capsul" (obtainable from National Starch). The encapsulated ester can be blended with feed ingredients and extruded to form feed pellets. Alternatively, the encapsulated ester can be added to conventional feeds as a separate component at the time of feeding, eg. by mixing a small quantity of the encapsulated ester with the conventional feed in a feeding trough.

The following experimental data, which is given by way of example only, demonstrates the beneficial effects of ethyl butyrate in the context of the invention.

### Example 1

Two experiments were conducted in young pigs: a slaughter trial in which dissacharidase enzyme activities of the small intestine were measured, and a growth trial in which weight gain and food intake were measured.

### Experiment 1: Slaughter Trial

One litter of pigs was weaned at 21 days of age and the litter was divided into two groups of approximately equal weight. Pigs were fasted for 24 hours and then allowed ad libitum access to a commercially-available diet for the remainder of the trial. From the day after weaning to three days post-weaning, test pigs received 100mg of ethyl butyrate dispersed in 2ml of bovine milk, administered daily by gavage. Thereafter pigs received 200mg ethyl butyrate in 4ml of bovine milk administered daily by gavage until 6 days post weaning. Control pigs received an equivalent volume of bovine milk daily by gavage.

On the seventh day post-weaning, pigs were killed by intra-cardiac injection of pentabarbitone. The whole of the small intestine was removed and its length and weight both full and empty were determined. At 20% and 40% of the length of the small intestine a 10 cm segment was removed and stored on dry ice.

For assay of dissaccharidase digestive enzyme activity the frozen small intestinal segments were thawed, cut longitudinally and the lumen contents washed out with chilled physiological saline. The mucosal surface was gently blotted dry and the underlying smooth muscle scraped off with a microscope slide. Lactase, sucrase and maltase activities were determined by the method of Dahlquist, Anal. Biochem, 7 (1964) p. 18 - 25. Briefly: mucosal samples were homogenised in distilled water (1:19, w/v), homogenates were centrifuged at 2400rpm at 4°C for 30 minutes, an aliquot of the supernatent was incubated at 37°C in phosphate buffer (0.2M) with the appropriate dissaccharide (0.56M) at pH 6.0 for 60 mins. The reaction was terminated by addition of 6% perchloric acid. After centrifugation the supernatent was neutralised and analysed for glucose by the glucose oxidase method. Mucosal supernatents were assayed for protein by the method of Lowry et al, J. Biol. Chem 193 (1951) p.265 - 275.

### Results

There were 11 pigs in the litter; 6 were treated with ethyl butyrate and 5 were controls. The mean weight of the treated and control groups at weaning did not significantly differ: 6.1 kg and 6.2 kg for the treated and control groups respectively. Seven days after weaning, treated pigs were significantly heavier than controls: 7.3 kg and 6.6 kg respectively.

Lactase, sucrase and maltase activities were higher in treated than in control pigs at 20% and 40% of the length of the small intestine, whether expressed per gramme of wet mucosa, per mg of mucosal protein, or per cm of intestinal length (Table 1).

### Experiment 2: Growth Trial

Four litters of pigs were weaned at 21 days of age and each litter was divided into two groups of approximately equal weight. One group from each litter was allocated for ethyl butyrate treatment and the other for a control treatment. Weaned pigs were fasted for 24 hours and then allowed ad libitum access to a commercially available pig weaning diet for the remainder of the trial. Pigs were treated with ethyl butyrate: 100 mg for the first 3 days post-weaning and then 200mg for the remainder of the trial, or received a control treatment, as described for the slaughter experiment. Pigs were weighed at weaning, at 7 days and at 14 days post-weaning. Food intake for each group of pigs was measured daily.

### Results

The mean weight of the treated (n = 19) and control (n = 20) groups did not significantly differ at weaning: 6.3 kg and 6.4 kg for treated and control groups respectively. Treated pigs ate more and gained more weight than control pigs, and this effect was particularly marked in the first week post-weaning (Table 2).

Oral administration of ethyl butyrate to weaned pigs with a conventional post-weaning pig diet, caused an improvement in food intake and growth rate and an increase in the dissaccaridase digestive enzyme activities of the small intestine. Because administration was via gastric tube, rather than in-feed, the benefits of the ethyl butyrate cannot be associated with taste or other organoleptic properties.

**Table 1**

| MEAN DISSACCHARIDASE DIGESTIVE ENZYME ACTIVITIES | | |
|---|---|---|
| 20% of small intestinal length | Control | Treated |
| Lactase (I) | 15.2 | 57.6 |
| Lactase (II) | 0.43 | 1.43 |
| Lactase (III) | 1.12 | 6.45 |
| Maltase (I) | 63.6 | 139 |
| Maltase (II) | 1.76 | 3.52 |
| Maltase (III) | 4.90 | 15.8 |
| Sucrase (I) | 11.6 | 23.7 |
| Sucrase (II) | 0.32 | 0.60 |
| Sucrase (III) | 0.91 | 2.69 |

| 40% of small intestinal length | | |
|---|---|---|
| Lactase (I) | 32.1 | 48.8 |
| Lactase (II) | 1.37 | 3.05 |
| Lactase (III) | 1.77 | 5.15 |
| Maltase (I) | 315 | 437 |
| Maltase (II) | 7.81 | 13.0 |
| Maltase (III) | 18.4 | 46.2 |
| Sucrase (I) | 50.7 | 60.2 |
| Sucrase (II) | 1.28 | 1.83 |
| Sucrase (III) | 2.97 | 4.34 |
| I = Micromoles glucose/gm mucosa/hour II = Micromoles glucose/mg protein/hour III = Micromoles glucose/cm/hour | | |

**Table 2**

| **MEAN GROWTH AND FOOD INTAKE OF ETHYL BUTYRATE TREATED AND CONTROL PIGS** | | |
|---|---|---|
| | Control | EB Treated |
| Body weight at 21 days (kg) | 6.39 | 6.27 |
| Body weight at 28 days (kg) | 6.57 | 7.01 |
| Body weight at 35 days (kg) | 9.46 | 10.0 |
| Weight gain 21-35 days (kg) | 3.07 | 3.75 |
| Food intake 22-28 days (kg/pig) | 0.67 | 1.00 |
| Food intake 29-35 days (kg/pig) | 2.57 | 2.94 |

### Example 2

Pigs were weaned at 19-22 days of age, using routine management procedures, but received no creep feed before weaning. At weaning, groups were selected from several litters to have similar initial body weight in each pen. A total of nine blocks with 4-5 pigs per pen were trialled for 14 days.

Ethyl butyrate, encapsulated by spray-drying with maltodextrin and starch, was added at 0%, 0.25% 0.5% and 1.0% (w/w) to a commercial weaning diet and pelleted. The encapsulated product was assayed to have 22% ethyl butyrate (w/w), therefore concentrations of ethyl butyrate in the diet were 0%, 0.05%, 0.1% and 0.2% (w/w). Appropriate amounts of maltodextrin/starch were added to provide equivalent amounts in all diets.

Ad-lib food and water intake was permitted from weaning, and the food in the trough changed daily.

Table 3 summarises the average performance of the trial pigs and Table 3 gives average daily food intakes.

### Conclusions

Ethyl butyrate in the diet at inclusion levels of 0.1% and 0.2% (w/w) produced significant improvements in food intake and weight gain. This effect was evident in the first and second weeks after weaning. The effect was greater at 0.2% compared with 0.1%.

**Table 3**

| | **Ethyl Butyrate Concentration** | | | |
|---|---|---|---|---|
| | 0% | 0.05% | 0.1% | 0.2% |
| Number of pigs | 39 | 40 | 42 | 41 |
| Weight at weaning (kg) | 6.32 | 6.34 | 6.55 | 6.36 |
| Gain 0-7 days (kg) | 0.32 | 0.31 | 0.38 | 0.48 |
| Gain 7-14 days (kg) | 2.35 | 2.29 | 2.60 | 2.67 |
| Gain 0-14 days (kg) | 2.67 | 2.60 | 2.98 | 3.15 |
| Daily live weight gain 0-14 days (g) | 191 | 186 | 213 | 225 |
| Intake 0-7 days (kg) | 0.63 | 0.66 | 0.69 | 0.78 |
| Intake 7-14 days (kg) | 2.12 | 2.07 | 2.42 | 2.47 |
| Intake 0-14 days (kg) | 2.75 | 2.73 | 3.11 | 3.25 |

**Table 4**

| | **Ethyl Butyrate Concentration** | | | |
|---|---|---|---|---|
| | 0% | 0.05% | 0.1% | 0.2% |
| days post-weaning 1 | - | - | - | - |
| 2 | 23 | 13 | 15 | 42 |
| 3 | 95 | 102 | 90 | 142 |
| 4 | 123 | 147 | 132 | 142 |
| 5 | 118 | 129 | 151 | 142 |
| 6 | 119 | 126 | 136 | 143 |
| 7 | 149 | 145 | 161 | 169 |
| 8 | 166 | 154 | 188 | 202 |
| 9 | 214 | 189 | 246 | 262 |
| 10 | 150 | 248 | 305 | 300 |
| 11 | 298 | 292 | 332 | 338 |
| 12 | 355 | 350 | 381 | 390 |
| 13 | 380 | 398 | 456 | 454 |
| 14 | 461 | 439 | 509 | 528 |

### Example 3

### Efficacy of ethyl butyrate in calf diets

Ethyl butyrate was added directly to reconstituted commercial calf milk replacer and fed to calves twice daily, in fixed amounts, until calves were weaned after 5 weeks on trial. A solid 'starter' feed, containing no ethyl butyrate, was available ad libitum at all times.

Low doses of ethyl butyrate enhanced both live-weight gain and intake of the starter feed (see Tables 5 and 6).

**Table 5**

| Live-weight gain (LWG) | | | | |
|---|---|---|---|---|
| **Treatment** | **Dose of eth.but. (g/d)** | **LWG, weeks 0-3 (kg)** | **LWG, weeks 0-5 (kg)** | **LWG, weeks 0-8 (kg)** |
| 1 | 0 | 8.91 | 19.64 | 44.45 |
| 2 | 0.59 | 11.36 | 23.82 | 49.82 |
| 3 | 1.18 | 10.18 | 21.64 | 48.09 |
| 4 | 1.77 | 8.40 | 19.40 | 45.60 |

LWG increased as the dose of ethyl butyrate increased, up to a dosage of approximately 0.8g/d, (equivalent to approximately 1.6g ethyl butyrate/kg dried calf milk replacer), before declining thereafter.

**Table 6**

| Intake of starter feed | | | | |
|---|---|---|---|---|
| **Treatment** | **Dose of eth.but. (g/d)** | **Intake, weeks 0-3 (kg)** | **Intake, weeks 0-5 (kg)** | **Intake, weeks 0-8 (kg)** |
| 1 | 0 | 7.85 | 26.59 | 89.02 |
| 2 | 0.59 | 10.02 | 30.80 | 98.54 |
| 3 | 1.18 | 9.03 | 30.06 | 96.96 |
| 4 | 1.77 | 8.00 | 27.03 | 91.79 |

Responses in feed intake roughly parallelled those in LWG.

### Example 4

During the first few weeks of life, both of two identical groups of calves were fed two diets simultaneously: a commercially available liquid milk replacer and a commercially available solid starter feed. Ethyl butyrate had been added at a level of 0.2% by weight to the starter feed administered to one of the groups. The calves were fed a fixed amount of the milk replacer, and the starter feed was provided ad libitum. The results shown in Table 7 below represent the total starter intake and live weight gain over the first three weeks.

**Table 7**

| | Treatment | |
|---|---|---|
| | Control | + EB |
| Starter intake (kg/d) | 0.295 | 0.489 |
| Live-weight gain (kg/d) | 0.429 | 0.625 |

## Claims

1. Use of an ester of a C₂-C₆ fatty acid as a diet additive to enhance feed intake and/or growth rate in mammals.

2. Use of an ester according to claim 1, wherein the ester is an alkyl ester of a C₂-C₆ fatty acid.

3. Use of an ester according to claim 2, wherein the ester is ethyl butyrate.

4. Use of an ester according to claim 1-3, wherein the mammals are young ruminants, especially calves.

5. Use of an ester according to claim 1-3, wherein the mammals are young monogastric animals, especially piglets.

6. Use of ethyl butyrate as a diet additive to enhance disaccharase activity in the small intestine of pigs.

7. Use of ethyl butyrate as a diet additive to enhance lactase, sucrase or maltase activity in some parts of the small intestine of pigs.

## Patentansprüche

1. Verwendung eines Esters einer C₂-C₆-Fettsäure als Futterzusatz zum Steigern der Futteraufnahme und/oder der Wachstumsgeschwindigkeit bei Säugetieren.

2. Verwendung eines Esters gemäß Anspruch 1, wobei der Ester ein Alkylester einer C₂-C₆-Fettsäure ist.

3. Verwendung eines Esters gemäß Anspruch 2, wobei der Ester Ethylbutyrat ist.

4. Verwendung eines Esters gemäß Anspruch 1-3, wobei die Säugetiere junge Wiederkäuer, insbesondere Kälber, sind.

5. Verwendung eines Esters gemäß Anspruch 1-3, wobei die Säugetiere junge Tiere mit nur einem Magen, insbesondere Ferkel, sind.

6. Verwendung von Ethylbutyrat als Futterzusatz zur Stärkung der Disaccharidase-Aktivität im Dünndarm bei Schweinen.

7. Verwendung von Ethylbutyrat als Futterzusatz zur Stärkung der Lactase-, Sucrase- oder Maltase-Aktivität in einigen Teilen des Dünndarms bei Schweinen.

## Revendications

1. Utilisation d'un ester d'un acide gras en C₂₋₆ comme additif alimentaire pour rehausser l'absorption de la nourriture et/ou le taux de croissance des mammifères.

2. Utilisation d'un ester selon la revendication 1, dans laquelle l'ester est un ester alkylique d'un acide gras en C₂₋₆.

3. Utilisation d'un ester selon la revendication 2, dans laquelle l'ester est le butyrate d'éthyle.

4. Utilisation d'un ester selon les revendications 1 à 3, dans laquelle les mammifères sont de jeunes ruminants, en particulier des veaux.

5. Utilisation d'un ester selon les revendications 1 à 3, dans laquelle les mammifères sont de jeunes animaux monogastriques, en particulier des porcelets.

6. Utilisation du butyrate d'éthyle en qualité d'additif alimentaire pour rehausser l'activité de disaccharase dans l'intestin grêle des porcs.

7. Utilisation du butyrate d'éthyle en qualité d'additif alimentaire pour rehausser l'activité de lactase, sucrase ou maltase dans certaines parties de l'intestin grêle des porcs.
